# EUROPEAN PATENT APPLICATION

(11) **EP 2 632 011 A1**
(43) Date of publication of application: **28.08.2013**
(21) Application number: 11863961.6
(22) Date of filing: 14.12.2011
(51) Int. Cl.: H02J 3/38

(54) **METHOD FOR IMPLEMENTING ON/OFF-GRID DUAL-MODE OPERATION OF BIDIRECTIONAL CONVERTER IN MICRO POWER GRID**

(30) Priority: 19.04.2011 CN 201110097368
(71) Applicant: Henan Electric Power Corporation Electric Power Science Research Institute, Erqi Zhengzhou, Henan 450052 (CN); Beijing Soaring Electric Technology Co. Ltd., Beijing 100094 (CN); State Grid Corporation of China, Beijing 100031 (CN)
(72) Inventor: LI, Zhaohui, Zhengzhou Henan 450052 (CN); WANG, Jing, Zhengzhou Henan 450052 (CN); YU, Xiaopeng, Zhengzhou Henan 450052 (CN); YANG, Haijing, Zhengzhou Henan 450052 (CN); WANG, Yang, Zhengzhou Henan 450052 (CN); LIU, Wei, Zhengzhou Henan 450052 (CN); LIU, Bo, Haidian Beijing 100094 (CN); YANG, Baosheng, Haidian Beijing 100094 (CN)
(74) Representative: Gosnall, Toby
(86) International application number: PCT/CN2011/083905
(87) International publication number: WO 2012/142841

(57) **Abstract**

The present invention provides a method for realizing on/off-grid dual-mode operation of a bidirectional converter in a micro power grid, wherein an on/off-grid controller in the micro power grid detects if the large power grid loses power or the power supply is resumed, instructions of "prepare to go off-grid", "go off-grid", "prepare to go on-grid", or "go on-grid" are sent to the bidirectional converter in an interface form of two-bit binary code, meanwhile the on/off-grid controller communicates with the micro power grid control system, and the micro power grid control system sends instruction signal of "charge/discharge power" to make the bidirectional converter perform a corresponding operation. When the large power grid loses power, the bidirectional converter will immediately transfer from the on-grid operation state to the off-grid operation state and switch to the operating mode of voltage source. Without additional investment on facility, this method solves the problem that the energy storage system and photovoltaic on-grid inverter can not work after the large power grid loses power, and the problem that it's difficult to set up a micro power grid system, and meanwhile it realizes a fast and seamless conversion between off-grid operation and on-grid operation in the micro power grid control.

## Description

### Field of the Invention

The present invention relates to the field of micro power grid, in particular, relates to a method for realizing on/off-grid dual-mode operation of a bidirectional converter in a micro power grid.

### Description of the Prior art

At present, the strong and smart grid in China has stepped into the whole construction stage, and will be promoted in fields of the demonstration project, the charging electric facilities for electric vehicle, the new energy acceptance, and the resident smart electricity, and as the important part of the smart grid, the micro power grid will have a wide range of applications. The micro power grid means a small power generation and distribution system integrating the distributed power source, the energy storage device, the energy conversion devices, the related loads and monitors and protection devices, which is an autonomous system capable of achieving self-control, protection and management and which operates through connecting with an external grid in a parallel manner or separately. The energy storage and energy conversion devices in the micro power grid are particularly important, and traditional energy storage devices and energy conversion devices use passive control manner, for example, neither the bidirectional converter for the battery charging/discharging nor the photovoltaic power generation equipment can work without the power grid. The generally used powers in a micro power grid are micro gas turbine, fuel cell, photovoltaic cell, wind turbines and etc. However, the solar power and the wind power are voltage sources which output voltages intermittently and randomly and are unable to provide a stable voltage. To re-equip a power in a system that already has an energy storage device, not only requires investment on additional equipments but also complicates the setup of the system.

### Summary of the Invention

The present invention is intended to provide a method for realizing on/off-grid dual-mode operation of a bidirectional converter in a micro power grid, which realizes a fast and seamless conversion between the micro power grid and the large power grid.

The present invention uses the following technical solutions: a method for realizing on/off-grid dual-mode operation of a bidirectional converter in a micro power grid including the following steps: (1) the on/off-grid controller of the micro power grid detecting whether the large power grid loses power, if the large power grid loses power, the on/off-grid controller will send an instruction of preparing to go off-grid to a bidirectional converter, and meanwhile the on/off-grid controller will send an instruction of starting control strategy of going off-grid to the micro power grid control system; (2) the micro power grid control system making a comprehensive judgment on whether the micro power grid meets the off-grid conditions according to the power sources and the loads in the micro power grid, if the micro power grid meets the conditions, the on/off-grid controller will send an instruction of going off-grid to the bidirectional converter, and meanwhile the micro power grid control system will send an instruction of discharging power to the bidirectional converter to make the bidirectional converter to switch to an off-grid state and be in an operating mode of voltage source so as to supply a stable voltage source for the loads and the energy conversion devices in the micro power grid; (3) the on/off-grid controller of the micro power grid detecting whether an external power grid resumes power supply, if the external power grid resumes power supply, the on/off-grid controller will send an instruction of preparing to go on-grid to the bidirectional converter, and meanwhile send an instruction of starting control strategy of going on-grid to the micro power grid control system; (4) the micro power grid control system making a judgment on whether the micro power grid meets on-grid conditions according to the power sources and the loads in the micro power grid, if the micro power grid meets the conditions, the on/off-grid controller will send an instruction of going on-grid to the bidirectional converter, and meanwhile the micro power grid control system will send an instruction of charging/discharging to the bidirectional converter and recover all of the loads in the micro power grid, so as to make the bidirectional converter switch to an on-grid state and be in an operating mode of current source.

The judgment made by the micro power grid control system on whether the micro power grid meets the off-grid conditions in the said step (2) is that if the on/off-grid controller has sent an off-grid signal, and other power sources in the micro power grid have stopped working, and the energy storage devices are in the normal state, and the bidirectional converter is in the operating mode of current source, the micro power grid will be considered to meet the off-grid conditions.

The judgment made by the micro power grid control system on whether the micro power grid meets the on-grid conditions in the said step (4) is that if the on/off-grid controller has sent an on-grid signal, and an on-grid switch has been closed, and the energy storage devices are in the normal state, and the bidirectional converter is in the operating mode of voltage source, the micro power grid will be considered to meet the on-grid conditions.

The said on/off-grid controller in the micro power grid sends instructions by a method of using two-bit binary codes and via two dry contacts which connect the on/off-grid controller and the bidirectional converter.

In the present invention, the on/off-grid controller detects the state of the large power grid in order to send the instructions of preparing to go on-grid, going on-grid, preparing to go off-grid and going off-grid to the bidirectional converter. When the large power grid loses power, the bidirectional converter will immediately transfer from on-grid state to off-grid state and supply a stable voltage source for the loads and energy conversion devices in the micro power grid to support the micro power grid to operate off-grid. Without additional investments on facilities, this method solves the problem that the energy storage system and photovoltaic on-grid inverter can not work after the large power grid loses power, and the problem that it's difficult to set up a micro power grid system, and meanwhile it realizes a fast and seamless conversion between off-grid operation and on-grid operation in the micro power grid control.

### Brief Description of the Drawings

Figure 1 is a circuit block diagram of the micro power grid system;
Figure 2 is a flowchart illustrating the procedure that the on/off-grid controller controls the bidirectional converter to switch between the on/off-grid operation modes.

### Detailed Description of the Preferred Embodiments

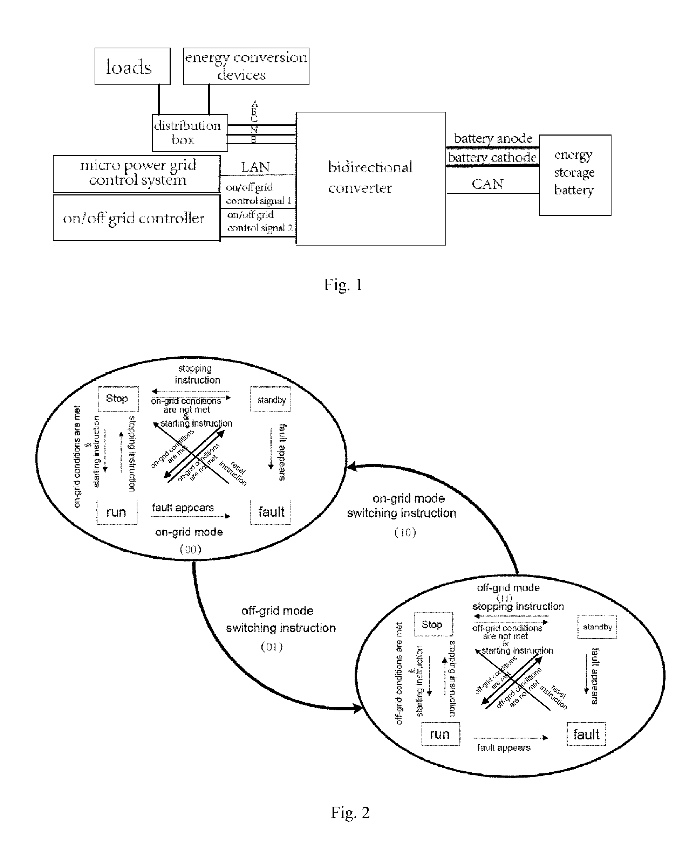

As shown in figure 1, the micro power grid system comprises an on/off-grid controller, a micro power grid control system, a battery, a bidirectional converter, a photovoltaic power generation system and loads. In the case of the large power grid supplying power normally, the bidirectional converter communicates with the micro power grid control system via LAN and it is controlled by the micro power grid control system, realizing the real-time control and monitor of the micro power grid control system. The on/off-grid controller communicates with the micro power grid control system, and the micro power grid control system sends the bidirectional converter signals to control the bidirectional converter's charging and discharging action. The bidirectional converter communicates with the BMS (battery management system) for the energy storage battery by way of CAN bus communication for real-time monitoring of the operation status of the battery.

As shown in figure 2, the method for realizing on/off-grid dual-mode operation of a bidirectional converter in a micro power grid, includes the following steps of: (1) the on/off-grid controller of the micro power grid detecting whether the large power grid loses power, if the large power grid loses power, the on/off-grid controller will send an instruction of preparing to go off-grid to the bidirectional converter, and meanwhile the on/off-grid controller will send an instruction of starting control strategy of going off-grid to the micro power grid control system; (2) the micro power grid control system making a comprehensive judgment on whether the micro power grid meets the off-grid conditions according to the power sources and the loads in the micro power grid, if the micro power grid meets the conditions, the on/off-grid controller will send an instruction of going off-grid to the bidirectional converter, and meanwhile the micro power grid control system will send an instruction of discharging power to the bidirectional converter to make the bidirectional converter to switch to an off-grid state and be in the operating mode of voltage source so as to supply a stable voltage source for the loads and the energy conversion devices in the micro power grid; (3) the on/off-grid controller of the micro power grid detectings whether the external power grid resumes power supply, if the external power grid resumes power supply, the on/off-grid controller will send an instruction of preparing to go on-grid to the bidirectional converter, and meanwhile send an instruction of starting control strategy of going on-grid to the micro power grid control system; (4). the micro power grid control system making a judgment on whether the micro power grid meets the on-grid conditions according to the power sources and the loads in the micro power grid, if the micro power grid meets the conditions, the on/off-grid controller will send an instruction of going on-grid to the bidirectional converter, and meanwhile the micro power grid control system will send an instruction of charging/discharging to the bidirectional converter and recover all of the loads in the micro power grid, so as to make the bidirectional converter switch to an on-grid state and be in the operating mode of current source. The judgment made by the micro power grid control system on whether the micro power grid meets the off-grid conditions in the said step (2) is that if the on/off-grid controller has sent an off-grid signal, and other power sources in the micro power grid have stopped working, and the energy storage devices are in the normal state, and the bidirectional converter is in the operating mode of current source, the micro power grid will be considered to meet the off-grid conditions. The judgment made by the micro power grid control system on whether the micro power grid meets the on-grid conditions in the said step (4) is that if the on/off-grid controller has sent an on-grid signal, and the on-grid switch has been closed, and the energy storage devices are in the normal state, and the bidirectional converter is in the operating mode of voltage source, the micro power grid will be considered to meet the on-grid conditions. The said on/off-grid controller in the micro power grid sends instructions by the method of using two-bit binary codes and via two dry contacts which connect the on/off-grid controller and the bidirectional converter so as to realize a fast and seamless conversion between on-grid and off-grid. The signals for the dry contacts are expressed as two-bit binary codes, wherein 00 means "going on-grid", 01 means "preparing to go off-grid", 10 means "preparing to go on-grid" and 11 means "going off-grid".

## Claims

1. A method for realizing on/off-grid dual-mode operation of a bidirectional converter in a micro power grid, **characterized in that**, comprising the following steps of:
(1) an on/off-grid controller in the micro power grid detecting whether a large power grid loses power, if the large power grid loses power, the on/off-grid controller will send an instruction of preparing to go off-grid to the bidirectional converter, and meanwhile the on/off-grid controller will send an instruction of starting control strategy of going off-grid to the micro power grid;
(2) a micro power grid control system making a comprehensive judgment on whether the micro power grid meets off-grid conditions according to power sources and loads in the micro power grid, if the micro power grid meets the conditions, the on/off-grid controller will send an instruction of going off-grids to the bidirectional converter, and meanwhile the micro power grid control system will send an instruction of discharging power to the bidirectional converter to make the bidirectional converter to switch to an off-grid state and be in an operating mode of voltage source so as to supply a stable voltage source for the loads and the energy conversion devices in the micro power grid;
(3) the on/off grid controller of the micro power grid detecting whether an external power grid resumes power supply, if the external grid resumes power supply, the on/off-grid controller will send an instruction of preparing to go on-grid to the bidirectional converter, and meanwhile send an instruction of starting control strategy of going on-grid to the micro power grid control system;
(4) the micro power grid control system making a judgment on whether the micro power grid meets on-grid conditions according to the power sources and the loads in the micro power grid, if the micro power grid meets the conditions, the on/off-grid controller will send an instruction of going on-grid to the bidirectional converter, and meanwhile the micro power grid control system will send an instruction of charging/discharging to the bidirectional converter and recover all of the loads in the micro power grid, so as to make the bidirectional converter switch to an on-grid state and be in an operating mode of current source.

2. The method for realizing on/off-grid dual-mode operation of a bidirectional converter in a micro power grid according to claim 1, **characterized in that**, in the said step (2), the judgment made by the micro power grid control system on whether the micro power grid meets the off-grid conditions is that if the on/off-grid controller has sent an off-grid signal, and other power sources in the micro power grid have stopped working, and the energy storage devices are in the normal state, and the bidirectional converter is in the operating mode of current source, the micro power grid will be considered to meet the off-grid conditions.

3. The method for realizing on/off-grid dual-mode operation of a bidirectional converter in a micro power grid according to claim 2, **characterized in that**, in the said step (4), the judgment made by the micro power grid control system on whether the micro power grid meets the on-grid conditions is that if the on/off-grid controller has sent an on-grid signal, and an on-grid switch has been closed, and the energy storage devices are in the normal state, and the bidirectional converter is in the operating mode of voltage source, the micro power grid will be considered to meet the on-grid conditions.

4. The method for realizing on/off-grid dual-mode operation of a bidirectional converter in a micro power grid according to claim 3, **characterized in that**, the said on/off-grid controller in the micro power grid sends instructions by a method of using two-bit binary codes and via two dry contacts which connect the on/off-grid controller and the bidirectional converter.
